# DEMANDE DE BREVET EUROPEEN

(11) **EP 3 763 571 A1**
(43) Date de publication de la demande: **13.01.2021**
(21) Numéro de dépôt: 20183937.0
(22) Date de dépôt: 03.07.2020
(51) Int. Cl.: B60R 13/08

(54) **ECRAN DE PROTECTION ACOUSTIQUE POUR MOTEUR DE VÉHICULE AUTOMOBILE**

(30) Priorité: 11.07.2019 FR 1907821
(71) Demandeur: TREVES PRODUCTS, SERVICES & INNOVATION, 75008 Paris (FR)
(72) Inventeur: POTHIER, Marc, 51220 Hermonville (FR)
(74) Mandataire: Sayettat, Julien Christian

(57) **Abrégé**

L'invention concerne un écran (1) de protection acoustique pour moteur de véhicule automobile, ledit écran comprenant un corps (2) en mousse de polyuréthanne moulée élastiquement compressible et au moins un moyen de fixation (3) destiné à coopérer avec une embase (4) métallique solidaire dudit moteur et apte à subir une attraction magnétique, ledit moyen étant surmoulé par ledit corps et comprenant un aimant (5) destiné à coopérer par aimantation avec ladite embase, ledit aimant présentant une face de fixation (6) affleurant sensiblement la face interne (7) dudit corps destinée à être tournée vers ladite embase, un socle (8) fixé audit aimant, ledit socle présentant une partie d'ancrage (9) noyée dans la mousse et saillant radialement dudit aimant de manière à réaliser un ancrage mécanique dudit socle dans ledit corps.

## Description

L'invention concerne un écran de protection acoustique pour moteur de véhicule automobile et un montage d'un tel écran sur une embase solidaire dudit moteur.

Il est connu de réaliser un écran de protection acoustique pour moteur de véhicule automobile, ledit écran comprenant un corps en mousse de polyuréthanne moulée élastiquement compressible et au moins un moyen de fixation surmoulé par ledit corps qui est destiné à coopérer avec une embase métallique solidaire dudit moteur.

De nombreux agencements ont été proposés pour fixer un tel écran.

Ils présentent usuellement la particularité de requérir une adaptation de l'embase pour recevoir le moyen de fixation, ladite embase étant par exemple perforée ou encore pourvue d'une tige qui lui est rapportée par soudage.

Il en résulte une complexification de la réalisation.

Par ailleurs, on peut observer une dégradation de l'écran - par exemple par arrachement du moyen de fixation - lors des opérations de montage/démontage dudit écran.

L'invention a pour but de pallier ces inconvénients.

A cet effet, et selon un premier aspect, l'invention propose un écran de protection acoustique pour moteur de véhicule automobile, ledit écran comprenant un corps en mousse de polyuréthanne moulée élastiquement compressible et au moins un moyen de fixation destiné à coopérer avec une embase métallique solidaire dudit moteur et apte à subir une attraction magnétique, ledit moyen étant surmoulé par ledit corps, ledit moyen comprenant :
- un aimant destiné à coopérer par aimantation avec ladite embase, ledit aimant présentant une face de fixation affleurant sensiblement la face interne dudit corps destinée à être tournée vers ladite embase,
- un socle fixé audit aimant, ledit socle présentant une partie d'ancrage noyée dans la mousse et saillant radialement dudit aimant de manière à réaliser un ancrage mécanique dudit socle dans ledit corps.

Quand il est dit que la partie d'ancrage est « saillante radialement », on se réfère à une direction perpendiculaire à la face de fixation.

Avec l'agencement proposé, on réalise la fixation de l'écran sur l'embase par attraction magnétique.

Il en résulte qu'aucune adaptation de l'embase n'est requise pour recevoir le moyen de fixation, ce qui se traduit par une simplification de réalisation.

Par ailleurs, l'écran possède une grande robustesse face aux opérations de montage/démontage, le moyen de fixation étant peu susceptible de se dégrader ou d'être arraché du corps de l'écran malgré la nature élastique du corps, ceci de par la présence de la partie d'ancrage telle que définie plus haut.

Selon un deuxième aspect, l'invention propose un montage d'un tel écran sur une embase solidaire du moteur.

D'autres particularités et avantages de l'invention apparaîtront dans la description qui suit, faite en référence aux figures jointes, dans lesquelles :
[Fig.1] est une vue en coupe schématique d'un montage d'un écran selon une première réalisation,
[Fig.2] est une vue en coupe schématique d'un montage d'un écran selon une deuxième réalisation.

En référence aux figures, on décrit un écran 1 de protection acoustique pour moteur de véhicule automobile, ledit écran comprenant un corps 2 en mousse de polyuréthanne moulée élastiquement compressible - par exemple de masse volumique comprise entre 250 et 400 g/l - et au moins un moyen de fixation 3 destiné à coopérer avec une embase 4 métallique solidaire dudit moteur et apte à subir une attraction magnétique, ledit moyen étant surmoulé par ledit corps, ledit moyen comprenant :
- un aimant 5 destiné à coopérer par aimantation avec ladite embase, ledit aimant présentant une face de fixation 6 affleurant sensiblement la face interne 7 dudit corps destinée à être tournée vers ladite embase,
- un socle 8 fixé audit aimant, ledit socle présentant une partie d'ancrage 9 noyée dans la mousse et saillant radialement dudit aimant de manière à réaliser un ancrage mécanique dudit socle dans ledit corps.

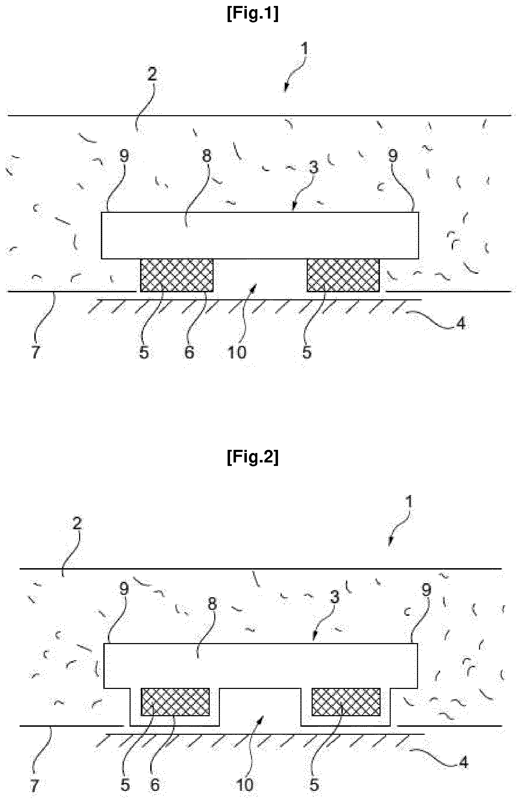

Selon la réalisation représentée en figure 1, la face de fixation 6 se situe dans le prolongement de la face interne 7 du corps 2, ce qui permet un contact direct entre l'embase 4 et l'aimant 5, et donc une attraction magnétique maximisée.

Selon une réalisation, l'aimant 5 est fixé au socle 8 par collage.

Selon la réalisation représentée en figure 2, le socle 8 est en matériau plastique moulé, l'aimant 5 étant surmoulé par ledit socle de manière à réaliser sa fixation.

Selon la réalisation représentée en figure 2, la face de fixation 6 se situe en retrait de la face interne 7 du corps 2.

En particulier, le matériau du socle 8 s'étend sur la face de fixation 6 selon une épaisseur inférieure à 2 mm - et en particulier inférieure à 1 mm - de manière à minimiser la distance entre l'aimant 5 et l'embase 4, afin de disposer d'une attraction magnétique suffisamment importante entre les deux.

Selon une réalisation, le socle 8 est à base d'un matériau apte à adhérer à la mousse de polyuréthanne - par exemple en polyuréthanne, polyester, carton, etc... - de manière à renforcer son ancrage mécanique par un ancrage chimique dans le corps 2.

Selon les réalisations représentées, l'aimant 5 présente un orifice 10 destiné à recevoir un doigt issu d'un moule de moulage du corps 2 en mousse, de manière à permettre un maintien temporaire du moyen de fixation 3 dans ledit moule avant son surmoulage par ledit corps.

En particulier, l'aimant 5 est en forme générale de rondelle, la partie d'ancrage 9 du socle 8 formant une collerette surplombant ledit aimant.

On décrit enfin un montage d'un tel écran 1, ledit montage comprenant ledit écran et une embase 4 métallique apte à subir une attraction magnétique, ledit écran étant fixé à ladite embase par attraction magnétique entre ladite embase et au moins un moyen de fixation 3 dudit écran.

## Revendications

1. Ecran (1) de protection acoustique pour moteur de véhicule automobile, ledit écran comprenant un corps (2) en mousse de polyuréthanne moulée élastiquement compressible et au moins un moyen de fixation (3) destiné à coopérer avec une embase (4) métallique solidaire dudit moteur et apte à subir une attraction magnétique, ledit moyen étant surmoulé par ledit corps, ledit écran étant **caractérisé en ce que** ledit moyen comprend :
• un aimant (5) destiné à coopérer par aimantation avec ladite embase, ledit aimant présentant une face de fixation (6) affleurant sensiblement la face interne (7) dudit corps destinée à être tournée vers ladite embase,
• un socle (8) fixé audit aimant, ledit socle présentant une partie d'ancrage (9) noyée dans la mousse et saillant radialement dudit aimant de manière à réaliser un ancrage mécanique dudit socle dans ledit corps.

2. Ecran selon la revendication 1, **caractérisé en ce que** la face de fixation (6) se situe dans le prolongement de la face interne (7) du corps (2).

3. Ecran selon l'une des revendications 1 ou 2, **caractérisé en ce que** l'aimant (5) est fixé au socle (8) par collage.

4. Ecran selon l'une des revendications 1 ou 2, **caractérisé en ce que** le socle (8) est en matériau plastique moulé, l'aimant (5) étant surmoulé par ledit socle de manière à réaliser sa fixation.

5. Ecran selon la revendication 4, **caractérisé en ce que** la face de fixation (6) se situe en retrait de la face interne (7) du corps (2).

6. Ecran selon la revendication 5, **caractérisé en ce que** le matériau du socle (8) s'étend sur la face de fixation (6) selon une épaisseur inférieure à 2 mm.

7. Ecran selon l'une quelconque des revendications 1 à 6, **caractérisé en ce que** le socle (8) est à base d'un matériau apte à adhérer à la mousse de polyuréthanne, de manière à renforcer son ancrage mécanique par un ancrage chimique dans le corps (2).

8. Ecran selon l'une quelconque des revendications 1 à 7, **caractérisé en ce que** l'aimant (5) présente un orifice (10) destiné à recevoir un doigt issu d'un moule de moulage du corps (2) en mousse, de manière à permettre un maintien temporaire du moyen de fixation (3) dans ledit moule avant son surmoulage par ledit corps.

9. Ecran selon la revendication 8, **caractérisé en ce que** l'aimant (5) est en forme générale de rondelle, la partie d'ancrage (9) du socle (8) formant une collerette surplombant ledit aimant.

10. Montage d'un écran (1) selon l'une quelconque des revendications précédentes, ledit montage comprenant ledit écran et une embase (4) métallique apte à subir une attraction magnétique, ledit écran étant fixé à ladite embase par attraction magnétique entre ladite embase et au moins un moyen de fixation (3) dudit écran.
